Europäisches Patentamt

European Patent Office

Office européen des brevets

(19)

(11) Veröffentlichungsnummer: **0 009 172**
**A1**

(12) **EUROPÄISCHE PATENTANMELDUNG**

(21) Anmeldenummer: **79103287.3**

(22) Anmeldetag: **05.09.79**

(51) Int. Cl.³: **F 16 L 55/12**

(30) Priorität: **15.09.78 DE 2840165**

(43) Veröffentlichungstag der Anmeldung: **02.04.80**
Patentblatt 80/7

(84) Benannte Vertragsstaaten: **AT BE CH FR GB NL**

(71) Anmelder: **Ruhrgas Aktiengesellschaft,**
**Huttropstrasse 60, D-4300 Essen 1 (DE)**
Anmelder: **Gasheizung gmbh, Eckenbergstrasse 54 -**
**58, D-4300 Essen 13 (DE)**

(72) Erfinder: **Hillringhaus, Karl-Heinz, Ing. (grad.),**
**Steinbrinkstrasse 50, D-4250 Bottrop (DE)**
Erfinder: **Dewal, Shriram, Ing. (grad.),**
**Luisenstrasse 11, D-4270 Dorsten 21 (DE)**

(54) **Vorrichtung zum Absperren von Gasleitungs-Rohrabschnitten.**

(57) Zum vorübergehenden Absperren von unter niedrigen bis mittleren Drücken stehenden Gasrohrleitungen, z. B. zwecks Reparaturarbeiten, werden sogenannte Absperrblasen verwendet, die nach dem Einführen in die Gasleitung von außen mit einem Gas aufgeblasen werden, das unter höherem als dem in der Leitung herrschenden Druck steht. Die erfindungsgemäße doppelwandige Absperrblase weist folgende Merkmale auf: Die Außenhülle besteht aus gasdichtem, elastisch dehnbarem Material, vorzugsweise aus Gummi, während die Innenhülle aus sehr wenig dehnbarem, druckfestem und gasdichtem Material, vorzugsweise aus kunststoffbeschichtetem Gewebe, besteht. Der Durchmesser der Außenhülle im aufgeblasenen Zustand ohne Überdruck ist höchstens gleich groß, vorzugsweise aber 5 bis 40% kleiner und der der Innenblase unter gleichen Bedingungen mindestens gleich groß, vorzugsweise aber 15 bis 60% größer als der der abzusperrenden Rohrleitung. Durch diese Ausbildung wird eine sehr gute Abdichtwirkung zwischen Rohrinnenwand und Absperrblase bei relativ niedrigem Überdruck in der Absperrblase erreicht.

0009172

Ruhrgas Aktiengesellschaft, Essen, und
die gasheizung gmbh, Essen

Vorrichtung zum Absperren von Gasleitungs-Rohrabschnitten

Die Erfindung betrifft eine Vorrichtung zum Absperren von Gasleitungs-Rohrabschnitten in Form einer in die Gasleitung eingeführten doppelwandigen Absperrblase, deren Innenhülle nach dem Einführen in die Leitung von außen mit Gas aufgeblasen wird, das unter höherem als dem in der Leitung herrschenden Druck steht.

Vorrichtungen bzw. Absperrblasen für den vorgenannten Zweck sind bereits bekannt. Die bekannten Absperrblasen bestehen aus einer druckfesten, sehr wenig dehnbaren Außenhülle und einer gasdichten, elastischen Innenhülle. Der Durchmesser der Außenhülle im aufgeblasenen Zustand ohne Überdruck ist bei diesen Blasen im allgemeinen größer als der Durchmesser der abzusperrenden Rohrleitung, der Durchmesser der Innenblase ist im aufgeblasenen Zustand ohne Überdruck gleich dem oder etwas kleiner als der der Außenblase.

Die Absperrblasen dienen als Hilfsmittel, wenn an Gasrohrleitungen, die unter niedrigen bis mittleren Drücken stehen, z. B. städtische Versorgungsleitungen, Reparatur- oder

- 2 -

Änderungsarbeiten, z. B. Abdichtungen, durchgeführt werden müssen, bei denen der betreffende Abschnitt der Leitung vorübergehend außer Betrieb genommen werden muß. Eine wesentliche Forderung, die an die Absperrblasen zu stellen ist, ist deshalb eine sichere Abdichtung zwischen der Innenwand der Rohrleitung und der Außenhülle der Absperrblase.

Bei den bisher bekannten Absperrblasen läßt die Qualität der Abdichtung in manchen Fällen zu wünschen übrig. Das beruht einerseits darauf, daß die Form und/oder das Material der Innenoberfläche der abzudichtenden Rohrleitung durch Ablagerungen und/oder Korrosionen beeinträchtigt sein kann. Andererseits ist die aus druckfestem Material gefertigte Außenhülle in manchen Fällen nicht genügend formanpassungsfähig, um bei beeinträchtigter Rohr-Innenoberfläche oder -form einen rundum gasdichten Abschluß zu gewährleisten. In anderen Fällen, insbesondere wenn Abdichtblasen verwendet werden, deren Außenhüllen-Durchmesser größer ist als der der Rohrleitung, können Faltenbildungen in der Außenhülle auftreten, durch die eine völlige Abdichtung verhindert wird. Außerdem besteht insbesondere bei glatter Rohrinnenwand die Möglichkeit, daß die Absperrblase sich unter dem Einfluß des in der Rohrleitung herrschenden Druckes verschiebt, da die druckfeste Außenhülle der bekannten Absperrblasen aus Kunststoffgewebe besteht, dessen Reibungskoeffizient gegenüber einer solchen Rohrinnenwand relativ gering ist, solange die Absperrblase nicht durch den Innendruck fest an die Rohrwand gepreßt wird.

Aufgabe dieser Erfindung ist es, eine Absperrblase zu schaffen, mit der die vorstehend beschriebenen Mängel beseitigt werden. Eine weitere Aufgabe besteht darin, die neue Absperrblase so auszubilden, daß eine Absperrblase für die Absperrung von Rohren mit unterschiedlichem

0009172

Durchmesser verwendet werden kann.

Diese Aufgaben werden durch eine Absperrblase mit den im kennzeichnenden Teil der Ansprüche benannten Merkmalen gelöst.

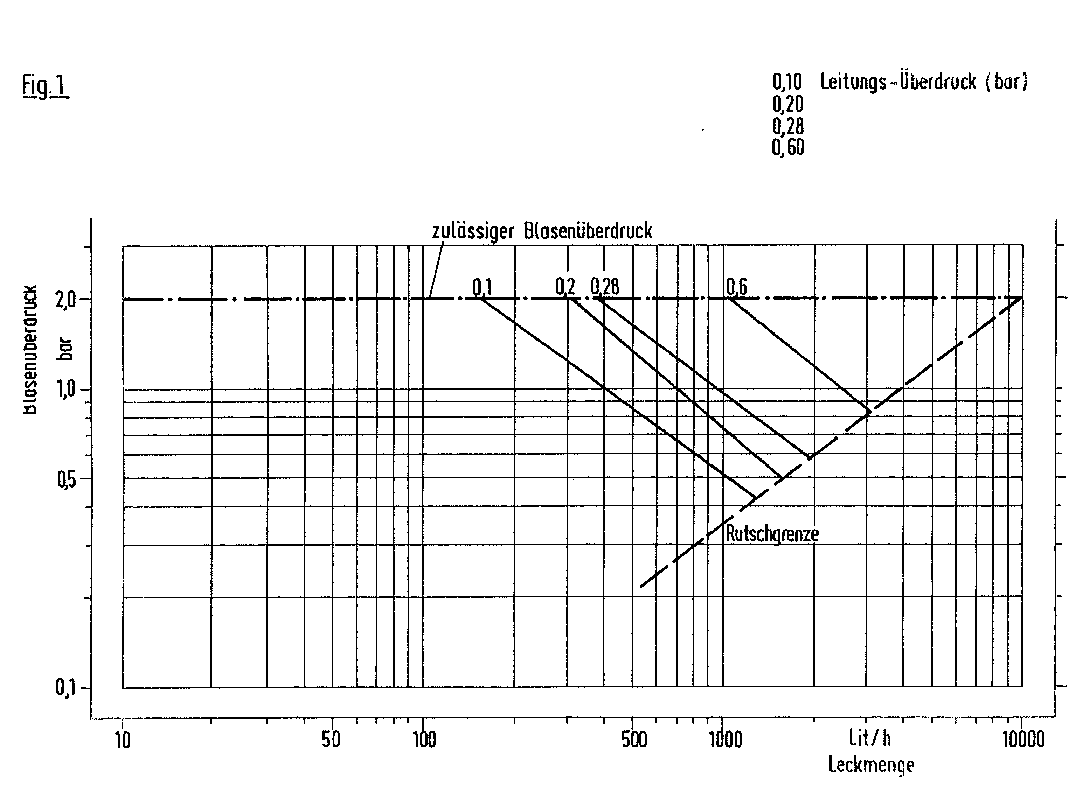

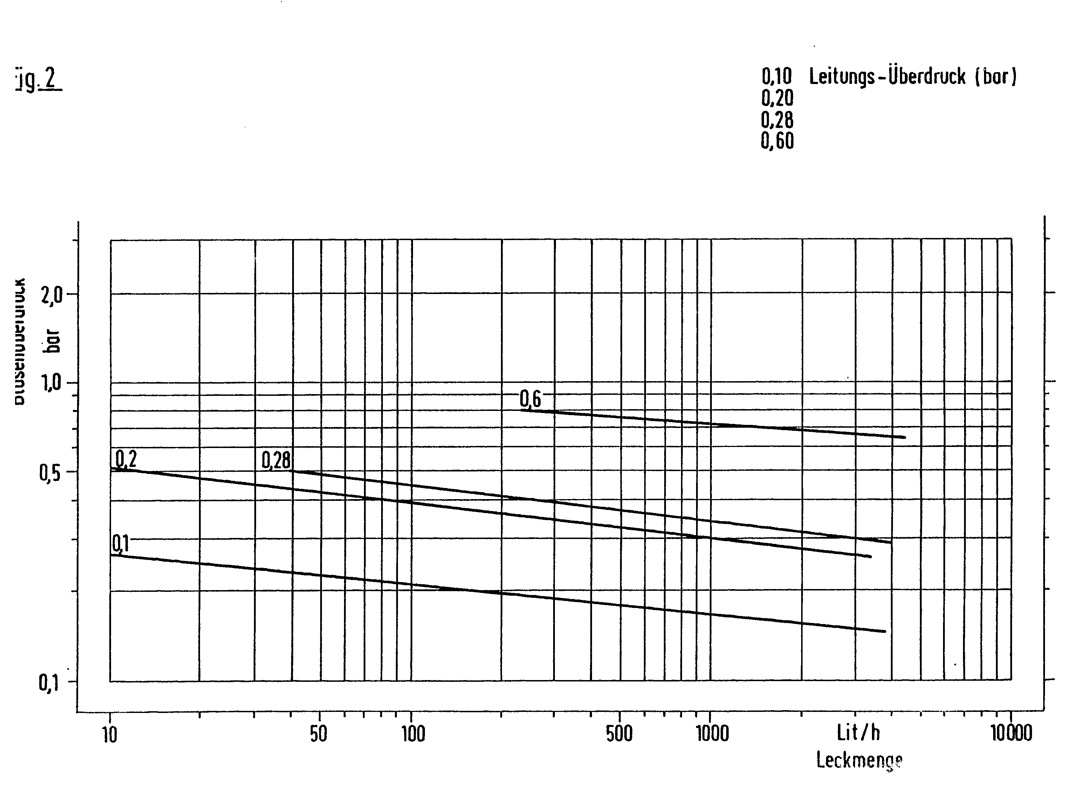

Einzelheiten der erfindungsgemäßen Absperrblase und ihrer vorteilhaften Wirkungs- bzw. Einsatzweise werden nachstehend unter Bezugnahme auf die Figuren 1 und 2 erläutert.

In Figur 1 ist die Abdichtwirkung einer bekannten Absperrblase dargestellt, in Figur 2 die Abdichtwirkung einer Absperrblase gemäß der Erfindung. Als Maß der Absperrwirkung ist die Leckmenge, d. h. die in den abgesperrten drucklosen Rohrabschnitt übertretende Gasmenge in Abhängigkeit von dem in der Blase herrschenden Überdruck bei unterschiedlichen Drücken im Leitungsabschnitt vor der Absperrblase aufgetragen.

Die in den Figuren 1 und 2 dargestellten Meßergebnisse wurden in einer Versuchsanordnung erhalten, die für die Entwicklung und Erprobung der neuen Absperrblase diente, und bei der ein Plexiglas-Rohr benutzt wurde, um das Verhalten bzw. Aussehen der Blasen beim und nach dem Aufblasen zu beobachten. - Anschließende Versuche mit einem innen angerosteten und verkrusteten Stahlrohr zeigten analoge Abdichtwirkungen wie im Plexiglasrohr. Die bei der bekannten Absperrblase auftretenden Leckmengen waren jedoch etwas größer als die in Figur 1 dargestellten, im Plexiglasohr gemessenen Mengen. -

Die eingangs schon genannte Faltenbildung der Außenhülle herkömmlicher Absperrblasen bei Verwendung von Blasen mit größerem als dem Rohrinnendurchmesser konnte im Plexiglasrohr deutlich beobachtet werden. Da in der Praxis, insbesondere bei älteren Rohrleitungen, niemals vorhersehbar

0009172

ist, ob bzw. in welchem Maße Korrosionen und/oder Ablagerungen den Rohrinnendurchmesser verändert haben, ist es nicht möglich, eine Absperrblase auzuwählen bzw. zu verwenden, deren Durchmesser gleich dem unbekannten tatsächlichen Innendurchmesser des Rohres ist. Aus diesem Grunde werden bisher bei Absperrmaßnahmen bekannte Absperrblasen verwendet, deren Außenhüllen-Durchmesser geringfügig größer ist als der Nenn-Durchmesser der Rohrleitung. Das Aufblasen erfolgt nach Einführen der Blase in die Rohrleitung durch Zuführung von Gas in deren gasdichte, elastisch dehnbare Innenhülle, die infolgedessen die sehr wenig dehnbare Außenhülle an die Rohrleitungswand drückt. In der Versuchsanordnung mit Plexiglasrohr wurde bei Verwendung der bekannten Blasen beobachtet, daß vor dem Erreichen des vorgesehenen Überdruckes in der Blase infolge der durch die Querschnittsverengung im Rohr hervorgerufenen Druckdifferenz vor und hinter der Absperrblase eine Verschiebung derselben auftritt. Dadurch ergab sich meist eine bezüglich der Gaszufuhrleitung zur Blase unsymmetrische Lage derselben im Rohr, die wiederum die Faltenbildung in der Außenhülle begünstigte bzw. hervorrief. Die Drücke, bei denen diese Verschiebungen beobachtet wurden, sind in Figur 1 als "Rutschgrenze" bezeichnet bzw. dargestellt.

Die beim Vergleich der Figuren 1 und 2 ersichtliche, wesentlich bessere Absperrwirkung der erfindungsgemäßen Absperrblase, die sich in bedeutend geringeren Gas-Leckmengen bei gleichen Rohrleitungs- und Blasen-Drücken bzw. wesentlich geringeren Blasen-Überdrücken bei vergleichbaren Gas-Leckmengen zeigt, ist auf die kennzeichnenden Merkmale der neuen Absperrblase zurückzuführen:

Durch die Verwendung von elastisch dehnbarem Material für die Außenhülle der Absperrblase und die gleichzeitige Wahl ihres Durchmessers im aufgeblasenen Zustand ohne

0009172

Überdruck derart, daß dieser vorzugsweise kleiner ist als der Durchmesser der Rohrleitung, wird erreicht, daß die Außenblase sich beim Aufblasen der Innenhülle in jedem Fall faltenfrei an die Wand der Rohrleitung anlegt, wobei auch eine Anpassung an Unebenheiten der Rohrwand infolge Korrosionen und/oder Ablagerungen erfolgt. Diese Wirkung wird erreicht, weil erfindungsgemäß der Durchmesser der sehr wenig dehnbaren, gasdichten Innenhülle immer größer ist als der der elastisch dehnbaren Außenhülle, d. h. die Außenluft wird durch das Aufblasen in jedem Falle aufgeweitet.

Der Zwischenraum zwischen den beiden Hüllen der Absperrblase ist praktisch luftleer. Dies wird beispielsweise dadurch erreicht, daß bei der Fertigung nach Einführen der Innenhülle in die Außenhülle die Innenhülle aufgeblasen wird, bis sie die Außenhülle ausfüllt, und daß anschließend eine beide Hüllen gasdicht verbindende Kappe aufgebracht wird, die später als Verbindungselement zum Anschluß der Gaszuführungsleitung dient.

Bei den Untersuchungen im Plexiglasrohr mit einer erfindungsgemäßen Absperrblase, deren Außenhülle aus Gummi bestand, wurde neben der Faltenfreiheit der Außenhülle auch festgestellt, daß eine Bewegung bzw. Verschiebung der Blase im Rohr nicht auftrat. Dies wird darauf zurückgeführt, daß der Reibungskoeffizient zwischen der Rohrwand und der elastischen Gummi-Außenhülle größer ist als derjenige zwischen Rohrwand und den bekannten Absperrblasen-Außenhüllen. Als Ursache dieses höheren Reibungskoeffizienten wird neben der Materialeigenschaft "Außenhülle aus Gummi" die Tatsache angesehen, daß die aufgeblasene, aufgeweitete Außenhülle sich besser als die bekannte einer unregelmäßigen Oberflächenform anpassen kann.

0009172

Außer der vorbeschriebenen besseren Abdichtung sowie der Rutschfestigkeit haben die erfindungsgemäßen Absperrblasen gegenüber den bisher bekannten den weiteren Vorteil, daß mit einer Absperrblase Rohre von unterschiedlichem Durchmesser verschlossen werden können. Beispielsweise kann eine Absperrblase, deren Außenhülle im aufgeblasenen Zustand ohne Überdruck 85 mm und deren Innenhülle im gleichen Zustand 140 mm Durchmesser hat, zum Absperren von Rohrleitungen mit Innendurchmessern von 85 bis 140 mm als Absperrorgan eingesetzt werden. Analoges gilt für Absperrblasen mit größeren bzw. kleineren Durchmessern. Zum Absperren einer Vielzahl von Rohrdurchmessern genügt infolgedessen eine relativ kleine Zahl von Absperrblasen unterschiedlicher Durchmesser.

Ein weiterer Vorteil der erfindungsgemäßen Absperrblase, der bei einem Vergleich der Figuren 1 und 2 offensichtlich wird, ist die Tatsache, daß der zu einer guten Abdichtwirkung erforderliche Blasenüberdruck wesentlich geringer ist als bei den bekannten Absperrblasen, bzw. daß man gegenüber letzteren wesentlich geringere Leckgasmengen erreichen kann. Dies bedeutet eine wesentliche Verbesserung der Arbeitsbedingungen bzw. eine Erhöhung der Sicherheit bei der Durchführung der Absperrmaßnahmen.

Schließlich bietet die neue Absperrblase noch die Möglichkeit, eine eventuell auftretende Undichtigkeit der druckfesten Innenhülle zu erkennen, die ggf. ein Aufplatzen der äußeren, gasdichten Hülle herbeiführen kann. Dies ist möglich, wenn der Innendruck der Blase überwacht wird, da das bei Undichtigkeit in die Außenhülle gelangende Gas diese weiter dehnt und infolgedessen der Innendruck sinkt.

Ansprüche

1. Vorrichtung zum Absperren von Gasleitungs-Rohrabschnitten in Form einer in die Gasleitung eingeführten doppelwandigen Absperrblase, deren Innenhülle nach dem Einführen in die Leitung von außen mit Gas aufgeblasen wird, das unter höherem als dem in der Leitung herrschenden Druck steht,
dadurch gekennzeichnet,
daß die Außenhülle der Absperrblase aus einem gasdichten, elastisch dehnbaren Material besteht und im aufgeblasenen Zustand ohne Überdruck einen Durchmesser aufweist, der höchstens gleich groß, vorzugsweise aber kleiner ist als der Durchmesser des abzusperrenden Rohrabschnittes, und daß die Innenhülle der Absperrblase aus einem sehr wenig dehnbaren, druckfesten, ebenfalls gasdichten Material besteht und im aufgeblasenen Zustand ohne Überdruck einen Durchmesser aufweist, der größer ist als der der Außenhülle und mindestens gleich groß, vorzugsweise aber größer ist als der Durchmesser der abzusperrenden Rohrleitung.

2. Vorrichtung nach Anspruch 1,
dadurch gekennzeichnet,
daß der Durchmesser der Außenhülle im aufgeblasenen Zustand ohne Überdruck 5 bis 40 %, insbesondere 8 bis 25 % kleiner ist und der Durchmesser der Innenhülle 15 bis 60 %, insbesondere 10 bis 40 % größer ist als der Durchmesser der abzusperrenden Rohrleitung.

3. Vorrichtung nach Anspruch 1 oder 2,
dadurch gekennzeichnet,
daß die Außenhülle der Absperrblase aus Gummi und ihre Innenhülle aus einem kunststoffbeschichteten Gewebe besteht.

Fig.1

0,10   Leitungs-Überdruck (bar)
0,20
0,28
0,60

zulässiger Blasenüberdruck

0,1     0,2  0,28        0,6

Rutschgrenze

Blasenüberdruck   bar

2,0

1,0

0,5

0,1

10          50   100          500  1000        Lit/h      10000

Leckmenge

0009172

Fig. 2

0,10   Leitungs-Überdruck (bar)
0,20
0,28
0,60

EUROPÄISCHER RECHERCHENBERICHT

EP 79 103 287.3

0009172
Nummer der Anmeldung

Europäisches Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - U - 7 517 541 (ULLRICH)<br>* Seite 3, Zeilen 5 bis 11; Fig. 2 *<br>-- | 1,3 |
| | GB - A - 1 245 254 (BEAGRIE & SON)<br>* Fig. 1, 2 *<br>-- | 1 |
| A | US - A - 4 083 384 (HORNE et al.)<br>* ganzes Dokument *<br>-- | |
| A | US - A - 4 013 097 (CALANDRA)<br>* ganzes Dokument *<br>-- | |
| A | US - A - 3 963 654 (HUTCHISON et al.)<br>* ganzes Dokument *<br>-- | |
| A | US - A - 3 834 422 (LARSON)<br>* ganzes Dokument *<br>-- | |
| A | GB - A - 899 236 (CARL-ZEISS-STIFTUNG)<br>* ganzes Dokument *<br>-- | |
| A | DE - C - 965 964 (BRAUN)<br>* ganzes Dokument *<br>---- | |

**KLASSIFIKATION DER ANMELDUNG (Int.Cl.3)**

F 16 L 55/12

**RECHERCHIERTE SACHGEBIETE (Int. Cl.3)**

E 21 B 33/00

F 16 K  7/00

F 16 L 55/00

G 01 M  3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 09-11-1979 | SCHLABBACH |

EPA form 1503.1  06.78